# EUROPEAN PATENT SPECIFICATION

(11) **EP 2 398 840 B1**
(45) Date of publication and mention of the grant of the patent: **13.07.2016**
(21) Application number: 10705716.8
(22) Date of filing: 18.02.2010
(51) Int. Cl.: C08G 69/28, B01D 71/56

(54) **INTERFACIAL POLYMERIZATION METHODS FOR MAKING FLUOROALCOHOL-CONTAINING POLYAMIDES**
GRENZFLÄCHENPOLYMERISATIONSVERFAHREN ZUR HERSTELLUNG VON FLUORALKOHOLHALTIGEN POLYAMIDEN
METHODE DE FABRICATION DE POLYMÉRISATION INTERFACE DE POLYAMIDES CONTENANT DES GROUPEMENTS FLUOROALCOOLS

(30) Priority: 20.02.2009 US 390118
(43) Date of publication of application: 28.12.2011
(73) Proprietor: International Business Machines Corporation, Armonk, NY 10504 (US)
(72) Inventor: ALLEN, Robert, David, San Jose CA 95120 (US); NA, Young-hye, Winchester Hampshire SO21 2JN (GB); SOORIYAKUMARAN, Ratnam, San Jose CA 95120 (US); FUJIWARA, Masaki, Cupertino CA 95014 (US); YAMANAKA, Kazuhiro, San Jose CA 95123 (US)
(74) Representative: Gascoyne, Belinda Jane
(86) International application number: PCT/US2010/024595
(87) International publication number: WO 2010/096565

(56) References cited:
- EP-A1- 1 810 963
- WO-A1-2006/041115
- WO-A1-2008/069812
- US-A- 5 922 104

## Description

### TECHNICAL FIELD

The invention relates to interfacial polymerization methods for making polyamides having fluoroalcohol groups.

### BACKGROUND

Aromatic polymers such as, for example, polyesters, polyamides, polyimides and polybenzoxazoles, are typically synthesized with melt polymerization or solution polymerization techniques, although a few such compounds can be synthesized by interfacial polymerization using aqueous and organic phases. The interfacial polymerization method has been applied to some polyamide, polyester, polycarbonate syntheses, and interfacial polyamide preparation methods have been widely used produce reverse osmosis membranes.

Interfacial polymerization can offer a number of advantages compared to general solution polymerization. For example, interfacial polymerization: (1) is typically conducted at a lower temperature, which can result in an energy saving; (2) uses fewer organic solvents; (3) makes it possible to maintain a 1:1 molar ratio of each bifunctional monomer to obtain a polymeric product with a higher molecular weight; and (4) makes it easier to isolate a resulting polymeric product.

EP 1810963 A in the name of Central Glass Company Limited discloses fluorine-containing polymerisable monomers and polymer compounds made therefrom; in particular, the monomer has a plurality of polymerisable amines in the molecule and at the same time a hexafluoroisopropyl group. WO 2008/069812 A in the name of Central Glass Company Limited discloses photosensitive polybenzoxazines and methods for their production. EP 1783158 A in the name of Central Glass Company Limited discloses fluorine-containing polymerisable monomers and polymer compounds made therefrom. US patent 5922104 discloses a polyamide separation membrane having a repeating unit derived from 2,2'-bis(trifluoromethyl)benzidine and various types of dicarboxylic acid or dicarboxylic halide and prepared using low-temperature solution polymerisation.

### SUMMARY

However, since interfacial polymerization requires that one of the monomeric reactants be soluble in an aqueous solution, the polymer structures obtainable by interfacial polymerization have been quite limited. Further, even if a monomeric reactant is soluble in aqueous solution, undesirable side reactions can cause difficulties in interfacial polymerization procedures.

Preferred aspects of the present invention are directed to interfacial polymerization methods in which a basic aqueous chemical mixture including a monomeric polyamine reactant with pendant fluoroalcohol groups is reacted with an organic chemical mixture including a monomeric polymeric acyl halide reactant to produce a fluoroalcohol-containing polyamide polymeric product. The methods described herein are commercially useful for making polymers found in microelectronics and membrane applications.

The present invention is directed to a method including reacting a chemical mixture (A) and a chemical mixture (B) to form a polyamide, wherein (A) and (B) are immiscible with each other, and wherein:
(A) is an aqueous base comprising a monomeric polyamine reactant having one or more hexafluoroalcohol groups represented by Formula 1: 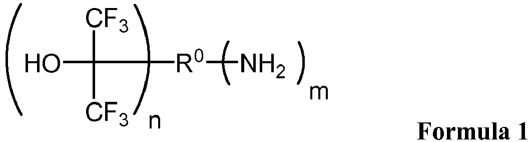 wherein R⁰ represents an organic group selected from the group consisting of aliphatic, alicyclic, aromatic, heterocyclic groups and combinations thereof, m is an integer of 2 or more, and n is an integer of 1 or more,
   and
(B) is organic and comprises a monomeric polyfunctional acyl halide reactant represented by Formula 2: 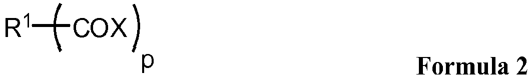 wherein R¹ represents an organic group selected from the group containing aliphatic alicyclic, aromatic, heterocyclic groups and combinations thereof, X is selected from the group consisting of fluorine, chlorine, bromine and iodine, and p represents an integer of 2 or more.

The details of one or more embodiments of the invention are set forth in the accompanying drawings and the description below. Other features, objects, and advantages of the invention will be apparent from the description and drawings, and from the claims.

### BRIEF DESCRIPTION OF DRAWINGS

FIG. 1A is a 1H-NMR spectrum in DMSO-d₆ of Polymer 4 of Example 1.
FIG. 1B is a 1H-NMR spectrum in DMSO-d₆ of a polymer according to Comparative Example 1.
FIG. 2 is an IR spectrum of product 11 of Example 5.
FIG. 3 is an IR spectrum of product 12 of Example 6.
FIG. 4A is an IR spectrum of product 13 of Comparative Example 2.
FIG. 4B is an IR spectrum of product 15 of Comparative Example 3.
FIG. 5 is a 1H-NMR spectrum in DMSO-d₆ of product 15 of Comparative Example 3.
FIG. 6 is an embodiment of a polymerization reaction of aqueous solution and an organic solution.
FIG. 7 is an embodiment of a polymerization reaction of an aqueous solution and an organic solution.
FIG. 8 is an embodiment of a polymerization reaction of an aqueous solution and an organic solution.
FIG. 9 is an embodiment of a polymerization reaction of an aqueous solution and an organic solution.

### DETAILED DESCRIPTION

Preferred aspects of the present invention are directed to interfacial polymerization methods for making fluoroalcohol-containing polyamide compounds. As used herein, the term interfacial polymerization refers to a polymerization reaction that occurs at or near the interfacial boundary of two immiscible solutions.

In one embodiment of the interfacial polymerization method described in this disclosure:
an aqueous, basic, chemical mixture (A) including a monomeric polyamine reactant having one or more hexafluoroalcohol groups, represented by Formula 1: 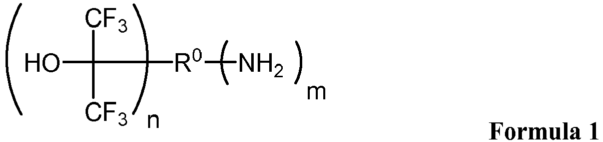 wherein
   R⁰ represents an organic group selected from aliphatic, alicyclic, aromatic, heterocyclic groups and combinations thereof,
   n represents an integer of 1 or more, 1 to 20, or 1 to 8; and
   m represents an integer of 2 or more, 2 to 20, or 2 to 8;
   is reacted with:
   an organic chemical mixture (B) including a monomeric polyfunctional acyl halide reactant, represented by Formula 2: 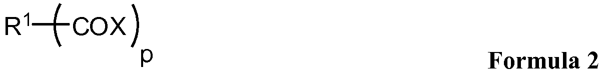 wherein
      R¹ represents an organic group selected from aliphatic alicyclic, aromatic, heterocyclic groups and combinations thereof,
      X is selected from fluorine, chlorine, bromine and iodine, and
      p represents an integer of 2 or more, 2 to 20, or 2 to 8.

The aqueous, basic chemical mixture (A) and the organic chemical mixture (B) are immiscible with each other. When (A) and (B) are placed in contact, immiscible means that there is an interface between (A) and (B).

The chemical mixtures (A) and (B) can independently be solutions, dispersions, or combinations thereof. Preferably, both (A) and (B) are solutions, and will be referred to in the discussion that follows as solutions.

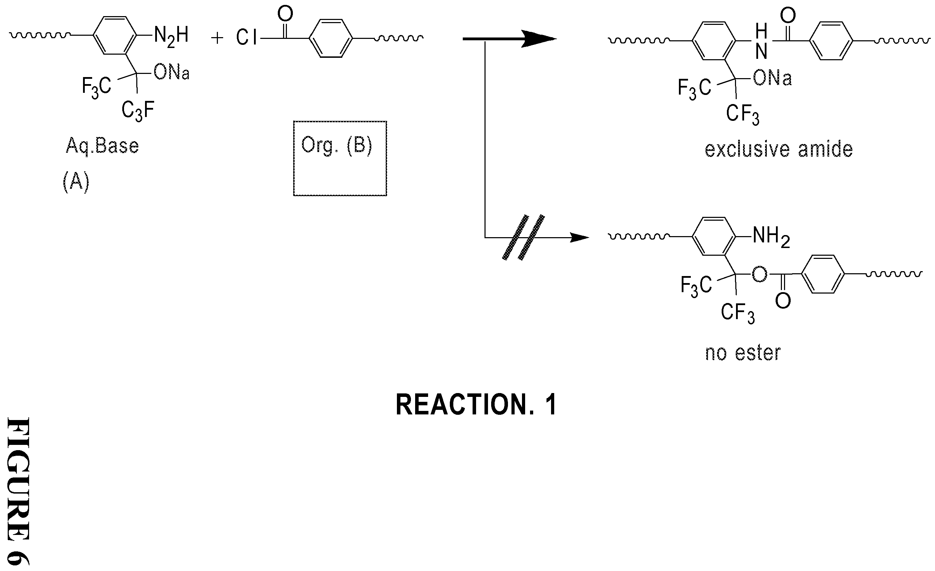

One embodiment of the interfacial polymerization of aqueous solution (A) and organic solution (B) is set forth in Reaction 1, shown in FIG. 6.

While not wishing to be bound by any theory, presently available evidence indicates that the basic aqueous solution (A) makes the polyamine monomeric reactant soluble while substantially reducing or eliminating undesirable side-reactions (such as esterification) during the interfacial polymerization process.

In some embodiments, R⁰ in the monomeric polyamine reactant of Formula 1 represents an organic group with 2 to 30 carbon atoms, or 2 to 20 carbon atoms, or 6 to 20 carbon atoms. For example, R⁰ can include an aromatic organic group selected from benzene rings, naphthalene rings, cyclohexane rings, adamantane rings, norbornane rings and combinations thereof.

In one embodiment, in the monomeric polyamine reactant of Formula 1, R⁰ is an organic group represented by Formula 3: 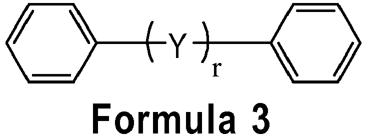 wherein Y represents an organic group selected from CH₂, O, S, C=O, SO₂, C(CH₃)₂, C(CF₃)₂ and combinations thereof, and r represents an integer of 0 or 1. In Formula 3, a monovalent amino (NH₂) and a monovalent hexafluoroalkyl [C(CF₃)₂OH] group are each chemically bonded to the benzene rings.

In another embodiment, in the monomeric polyamine reactant of Formula 1, R⁰ is an organic group represented by Formula 4: 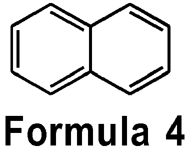 wherein a monovalent amino (NH₂) and a monovalent hexafluoroalkyl [C(CF₃)₂OH] group are each chemically bonded to the naphthalene rings.

In another embodiment, the monomeric polyamine reactant (A) includes at least one of a compound selected from a tetravalent organic compound represented by Formula 6 or a trivalent organic compound represented by Formula 7: 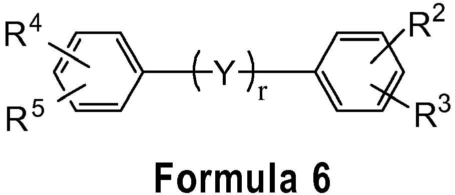 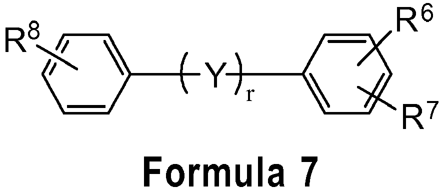 where R², R³, R⁴, R⁵, R⁶, R⁷ and R⁸ are each independently selected from NH₂ and C(CF₃)₂OH. Y represents an organic group selected from CH₂, O, S, C=O, SO₂, C(CH₃)₂, C(CF₃)₂ and combinations thereof, and r represents an integer of 0 or 1.

In another embodiment, the monomeric polyamine reactant in aqueous solution (A) includes at least one of a compound selected from a tetravalent organic compound represented by Formula 8 or a trivalent organic compound represented by Formula 9: 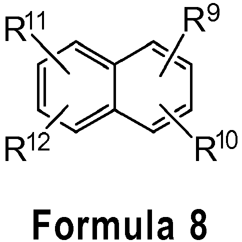 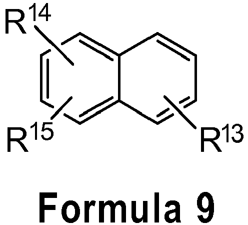 wherein R⁹, R¹⁰, R¹¹, R¹², R¹³, R¹⁴ and R¹⁵ are each independently selected from NH₂ and C(CF₃)₂OH.

In another embodiment, the monomeric polyamine reactant in aqueous solution (A) includes at least one of a compound selected from a trivalent organic compound represented by Formula 10 or a tetravalent organic compound represented by Formula 11, 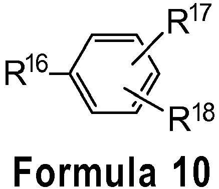 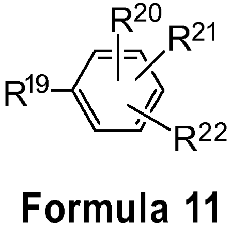 wherein R¹⁶, R¹⁷, R¹⁸, R¹⁹, R²⁰, R²¹ and R²² are each independently selected from NH₂ and C(CF₃)₂OH.

In other embodiments, the monomeric polyamine reactant in the aqueous solution (A) is represented by any of the Formulas 15 through 36, or combinations thereof:

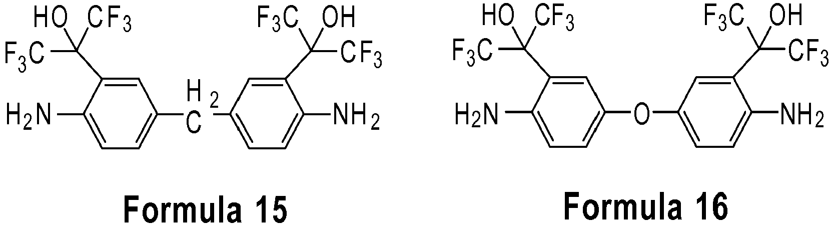

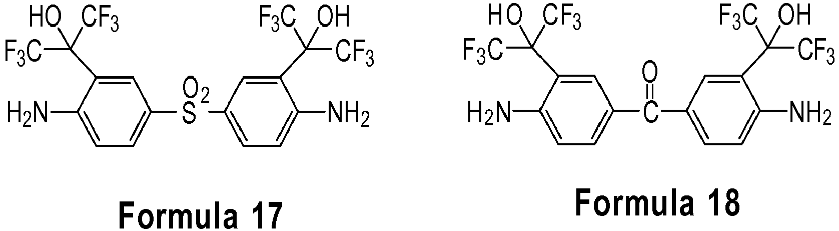

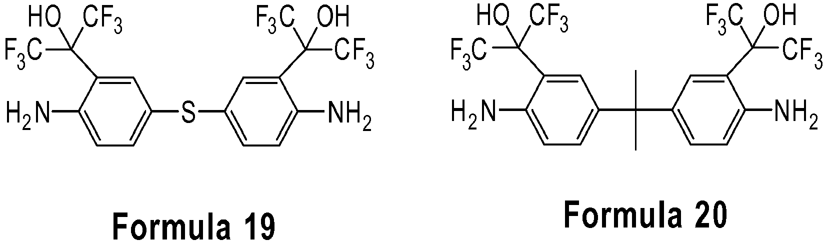

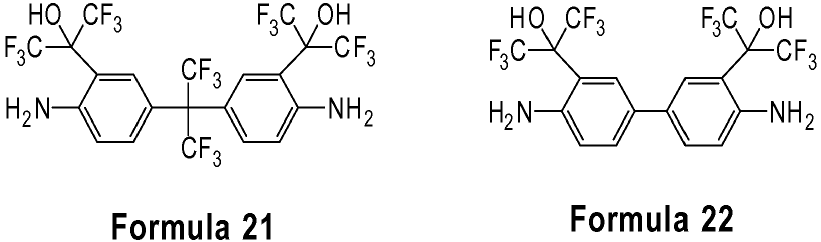

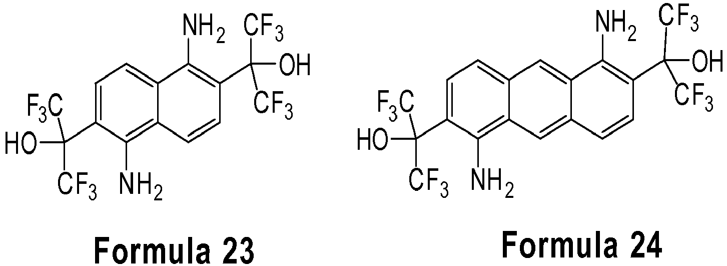

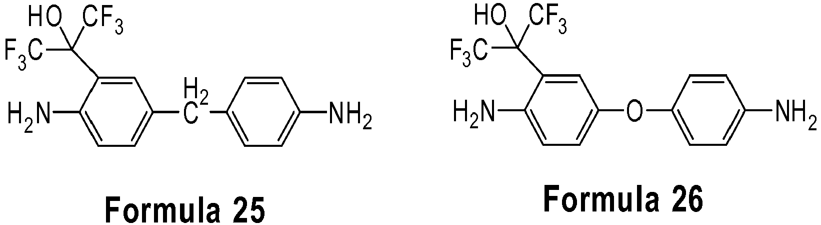

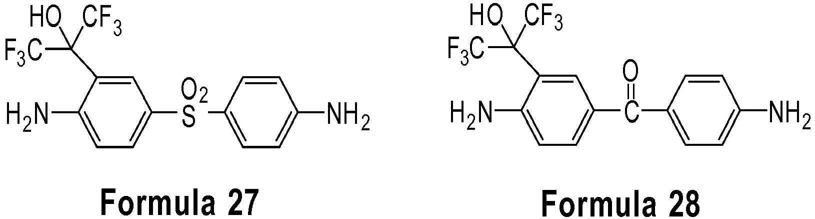

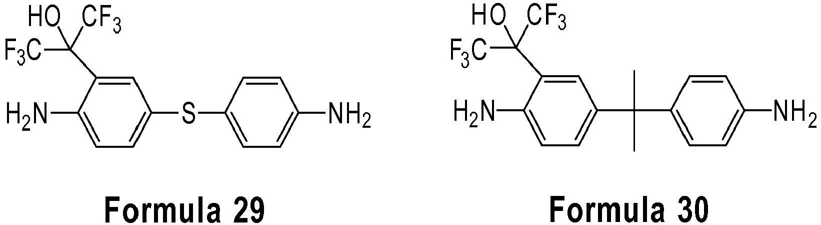

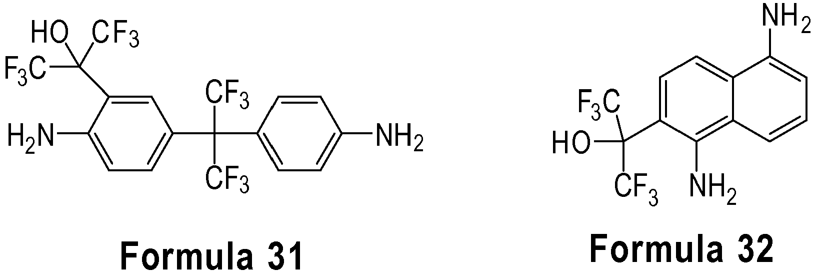

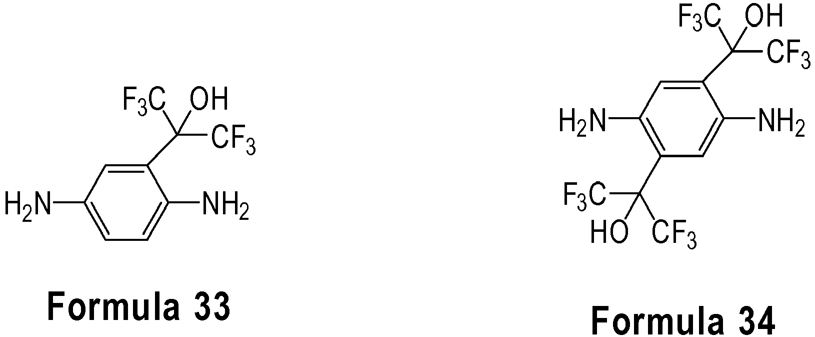

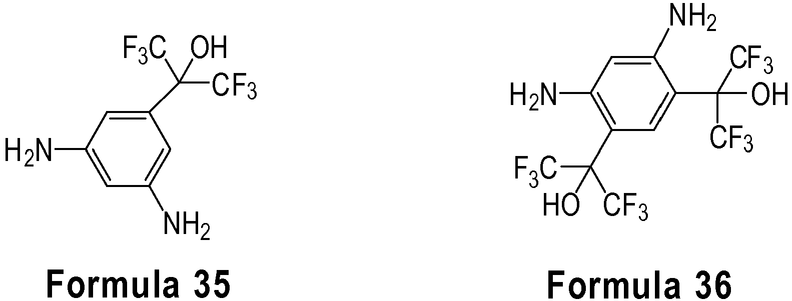

The base used in the aqueous solution (A) may vary widely, and can include an organic base, an inorganic base, and combinations thereof. For example, the base in solution (A) can include inorganic hydroxides, organic hydroxides, carbonates, bicarbonates, sulfides, amines and combinations thereof. Suitable bases include, but are not limited to, NaOH, KOH, Ca(OH)₂, Na₂CO₃, K₂CO₃, CaCO₃, NaHCO₃, KHCO₃, triethyl amine, pyridine, tetramethylammonium hydroxide and combinations thereof.
In some embodiments, R¹ in the polyfunctional acyl halide reactant of Formula 2 represents an organic group with 1 to 30 carbon atoms, or 1 to 20 carbon atoms, or 1 to 15 carbon atoms. In some embodiments, in the polyfunctional acyl halide reactant of Formula 2, R¹ can include an organic group selected from benzene rings, naphthalene rings, cyclohexane rings, adamantane rings, norbornane rings and combinations thereof.
In some embodiments, R¹ in the polyfunctional acyl halide reactant of Formula 2 represents an organic group represented by Formula 12, 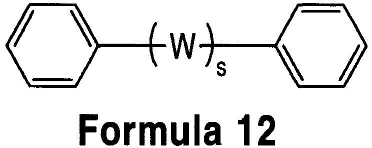 wherein W represents an organic group selected from CH₂, O, S, C=O, SO₂, C(CH₃)₂, C(CF₃)₂ and combinations thereof, and s represents an integer of 0 or 1. Monovalent COX is chemically bonded to the benzene rings, wherein X is independently selected from fluorine, chlorine, bromine and iodine.
In some embodiments, the monomeric polyfunctional acyl halide reactant in solution (B) includes at least one of a divalent organic compound represented by Formula 10a or a trivalent organic compound represented by Formula 11a: 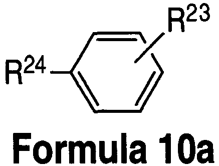 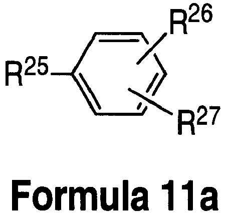 wherein R²³, R²⁴, R²⁵, R²⁶ and R²⁷ are each independently selected from monovalent COX, wherein X is independently selected from fluorine, chlorine, bromine and iodine.

In other embodiments, the monomeric polyfunctional acyl halide reactant in solution (B) includes at least one of a compound selected from a trivalent organic compound represented by Formula 13 or a divalent organic compound represented by Formula 14: 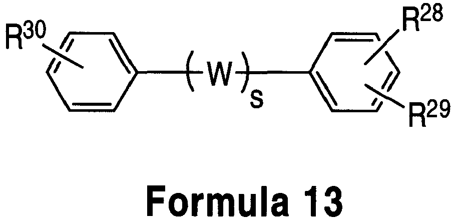 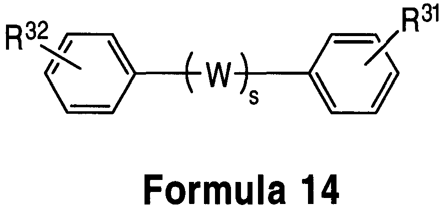 wherein R²⁸, R²⁹, R³⁰, R³¹ and R³² are each independently selected from monovalent COX, and X is independently selected from fluorine, chlorine, bromine and iodine. W represents an organic group selected from CH₂, O, S, C=O, SO₂, C(CH₃)₂, C(CF₃)₂ and combinations thereof, and s represents an integer of 0 or 1.

In other embodiments, the monomeric polyfunctional acyl halide reactant in solution (B) includes a compound selected from any of the compounds in Formulas 37 through 61, and combinations thereof:

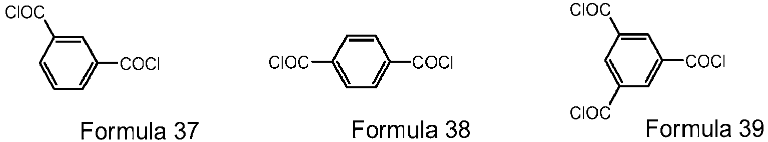

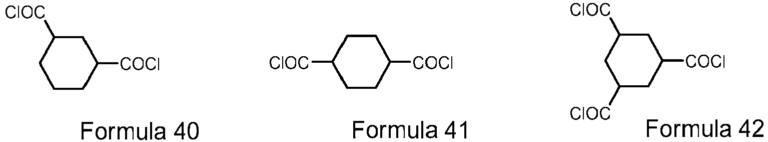

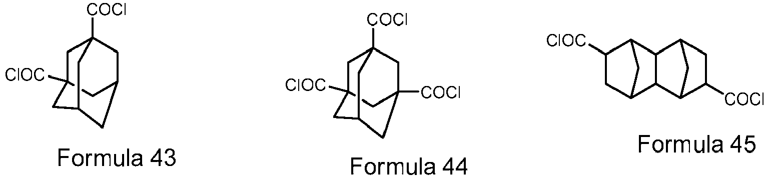

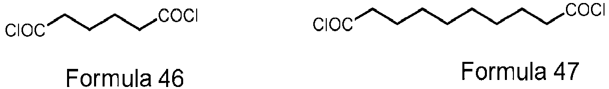

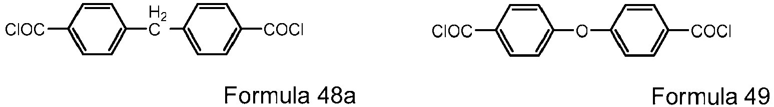

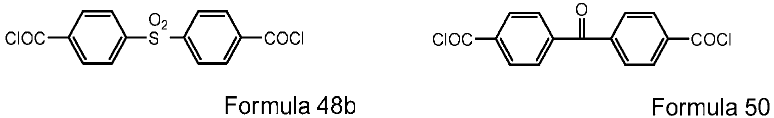

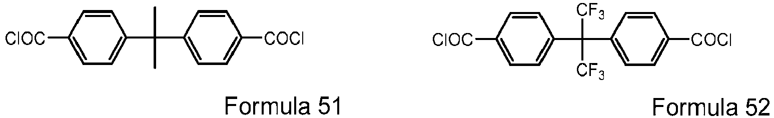

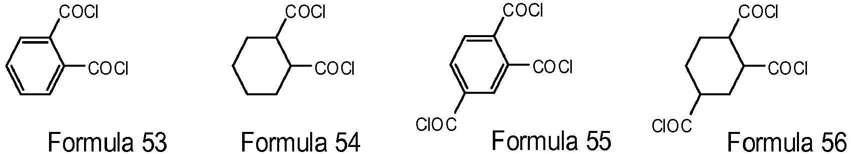

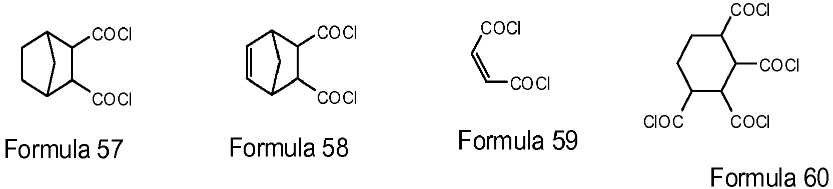

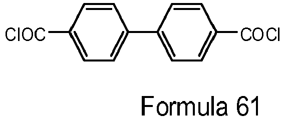

The organic solvent used in the organic solution (B) may vary widely, and can include organic compounds with 1 to 20 carbon atoms, or 1 to 16 carbon atoms, or 1 to 12 carbon atoms. Suitable organic solvents include, but are not limited to, n-hexane, n-heptane, n-octane, carbon tetrachloride, chloroform, dichloromethane, chlorobenzene, xylene, toluene, benzene and combinations thereof.

The concentration of the acyl halide reactants in the organic solution or the monomeric polyamine reactant in the aqueous solution can vary widely. For example, the concentration of the acyl halide reactants in the organic solution can range from 0.01 % (w/v) to 100 % (w/v), or 0.1% (w/v) to 100 % (w/v), or 0.5% (w/v) to 50 % (w/v). Similarly, the concentration of the monomeric polyamine reactant in the aqueous solution can range from 0.01 % (w/v) to 100 % (w/v), or 0.1% (w/v) to 50 % (w/v), or 0.1% (w/v) to 20 % (w/v). Specific concentrations used can be adjusted depending on the desired quantity of polymer to be formed.

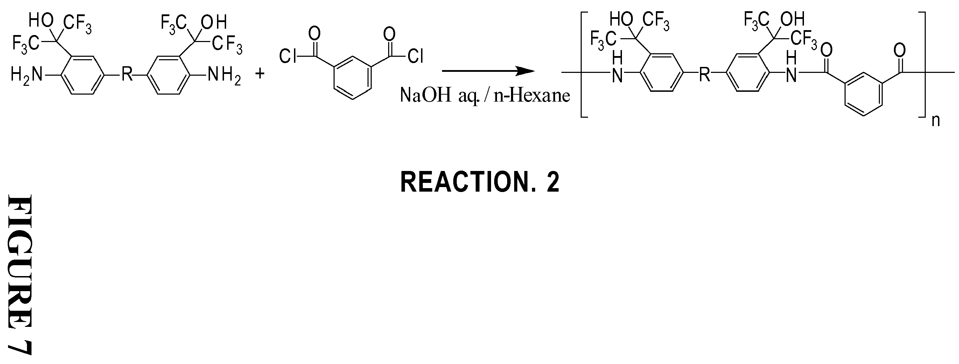

For example, in one embodiment shown in Reaction 2 in FIG. 7, the polymeric reaction product of solutions (A) and (B) in the presently described interfacial polymerization method is a hexafluoroalcohol (HFA)-containing polyamide, wherein R is selected from CH₂ and O:

The interfacial polymerization reaction conditions may vary widely, and several detailed examples are set forth below. However, the reaction is typically conducted by mixing solution (A) and (B) and vigorously stirring with a mechanical stirrer at -30 °C to 150 °C for 0.01 to 50 hours. Typically, the interfacial polymerization reaction is conducted for about 3 hours at room temperature, under nitrogen. In this application, room temperature means 10 °C to 40 °C, preferably 25 °C.

Optionally, a phase transfer catalyst may be added to at least one of solution (A) or solution (B). In some embodiments, a phase transfer catalyst can enhance reactivity.

The chemical mixtures (A) and (B) can include a wide variety of additives, and examples include surfactants, viscosity modifiers.

The polymeric reaction product can be isolated by any suitable method, and examples include filtration, precipitation, decantation, salting out.

The interfacial polymerization methods will now be illustrated by the following non-limiting examples.

### EXAMPLES

### Example 1: Production of Reaction Product 4

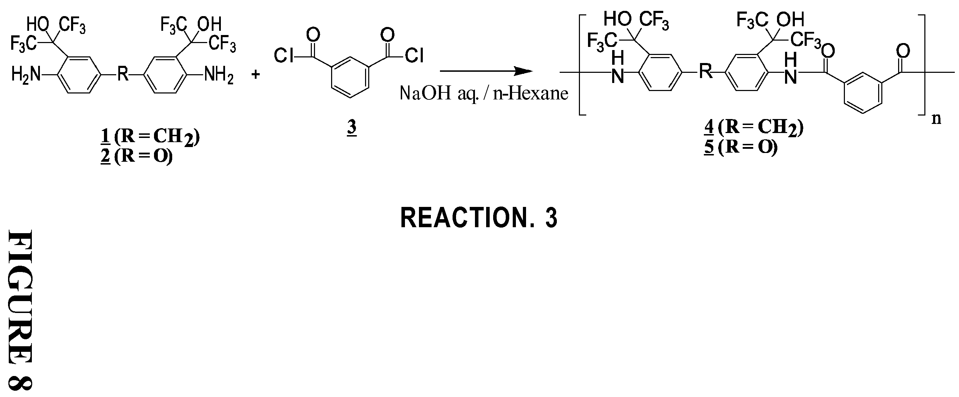

Referring to Reaction 3 in FIG. 8, to a 250-ml three-necked flask, the NaOH aqueous solution (NaOH/water: 0.396 g/70 ml) of **1** (2.51 g) and n-hexane solution of **3** (n-hexane/**3**: 70 ml / 0.958 g) were added, and then the mixture was stirred vigorously using a mechanical stirrer at room temperature for 3 hours through nitrogen.

A white powder (2.70 g) was obtained by filtration and subsequent drying at 60° C under vacuum. After reprecipitation into a mixture of 12N-HCl/methanol/water (1.8 g/30 ml/60 ml) from THF solution (THF/resulting white powder: 5.0g/0.5g), the product (polymer **4**) was obtained by filtration and subsequent drying at 60°C under vacuum, giving 0.35g: Mw(Mw/Mn) = 47,000(2.36).

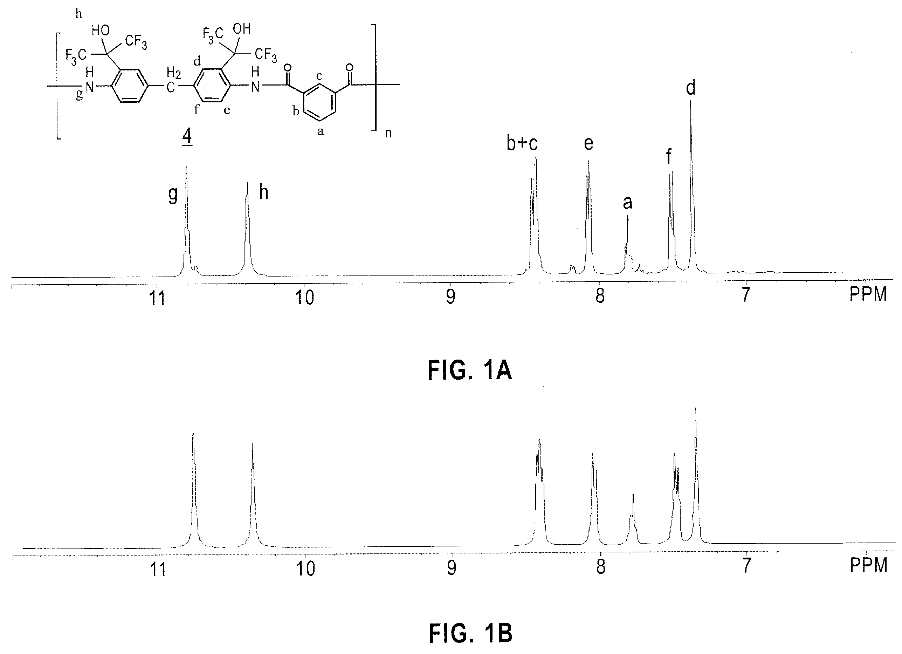

The 1H-NMR spectrum of **4** is shown in Figure 1A.

### Comparative Example 1

To a 100-ml three-necked flask fitted with nitrogen inlet and outlet tubes, **1** (1.50 g) and DMAc (8 ml) were added. After making solution, the flask was placed in dry ice/acetone bath. After freezing solution, **3** (0.57g) and DMAc (2 ml) were added, and then the mixture was stirred using a mechanical stirrer in ice/water bath for 3 hours through nitrogen and then at room temperature for 20 hours through nitrogen. After precipitation in methanol, the polymer (1.87 g) was obtained by filtration and drying at 60° C under vacuum: giving Mw(Mw/Mn) = 118,000(1.67).

Figure 1(B) shows the 1H-NMR spectrum of a polymer prepared according to Comparative Example 1.

As a result, it was confirmed that polymer **4** and authentic polymer both had the same chemical structure.

### Example 2: Production of Reaction Product 5

Referring again to Reaction 3 above, the product (polymer **5**) was produced from **2** and **3** (**2**/**3**: 1.163g/0.445g (2.18 mmol/2.19 mmol) in the same manner as Example 1, giving 1.46 g: Mw(Mw/Mn) = 40,000(3.10).

### Comparative Example 2: Production of Reaction Product 13

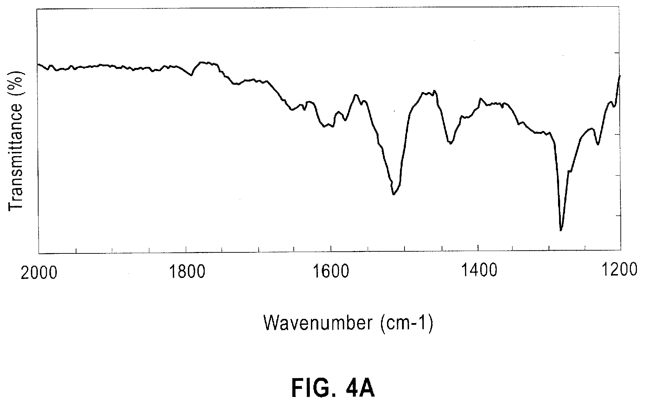

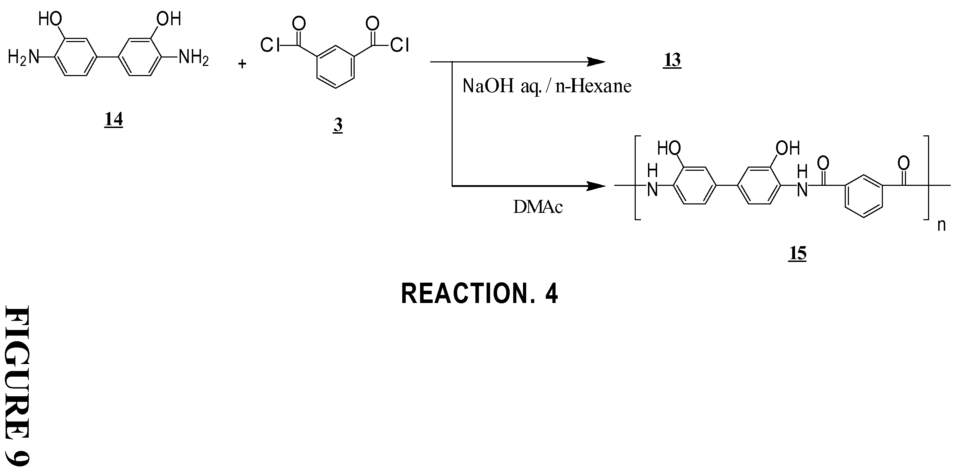

Referring to Reaction 4 in FIG. 9, the product (polymer **13**) was produced from **3** and **14** in the same manner as Example 1. An IR spectrum of **13** is shown in Figure 4A.

### Comparative Example 3: production of Reaction Product 15

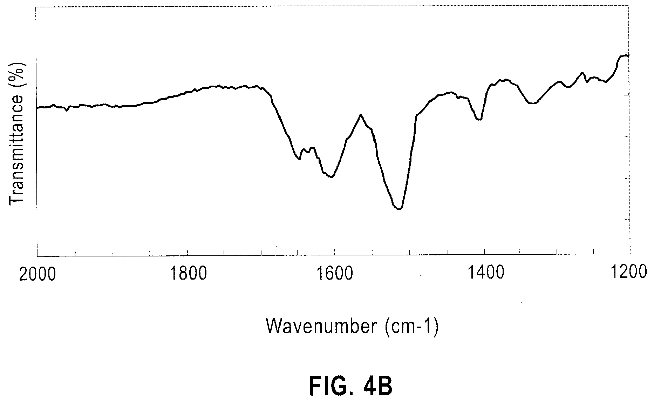

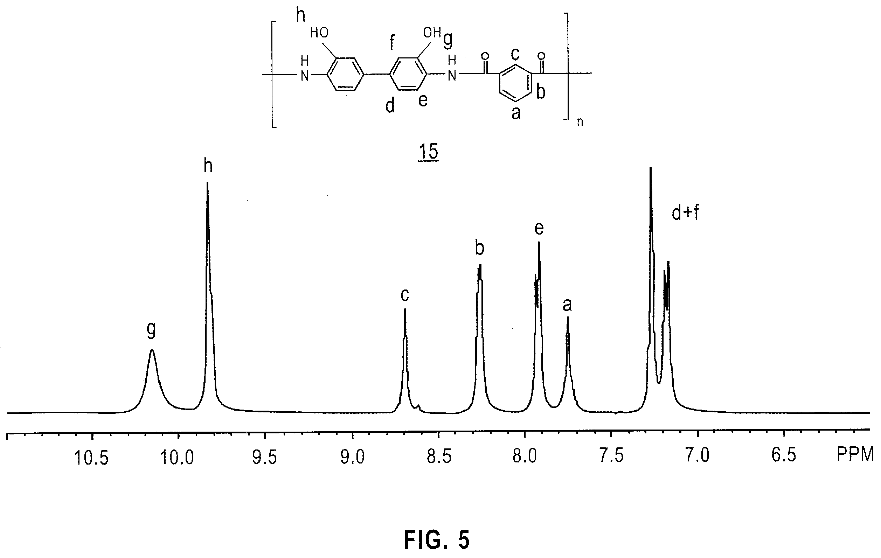

Referring again to Reaction 4, the product (polymer **15**) was produced from **3** and **14** in the same manner as Comparative Example 1. An inherent viscosity of **15** was measured to be 1.81 dL/g in NMP. IR and NMR spectra of **15** were shown in Figure 4B and Figure 5, respectively.

In the 1H-NMR spectrum shown in Figure 5, the structure of polymer **15** was fully assigned. As shown in Figure 4, there was clear difference in IR spectrum between **13** and **15.** Thus, a polymer having the same structure as polymer **15** can not be synthesized by an interfacial polymerization method.

### Example 3: Production of Reaction Product 7

Referring to Reactions 4 and 5, the product (polymer **7**) was produced from **1**, **6** and **3** (**1**/**6**/**3**: 0.849g/0.780g/0.653g (1.60 mmol/1.59 mmol/3.22 mmol)) in the same manner as Example 1: giving 0.61 g: Mw(Mw/Mn) = 14,900(2.11): a/b = 70/30 (determined by 19F-NMR).

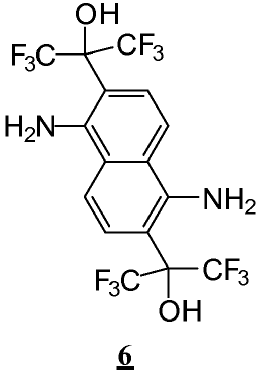

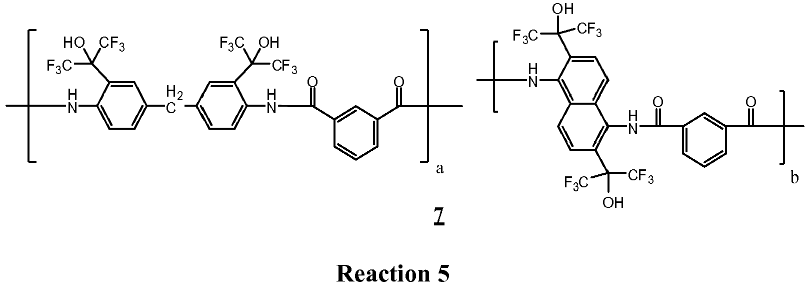

### Example 4: Production of Reaction Product 9

Referring to Reactions 4 and 6, the product (polymer **9**) was produced from **1**, **8** and **3** (**1**/**8**/**3**: 0.849g/0.780 g/0.653 g (1.60 mmol / 1.59 mmol / 3.22 mmol)) in the same manner as Example 1: giving 0.84 g: Mw(Mw/Mn) = 10,900(2.05): c/d = 77/23 (determined by 19F-NMR).

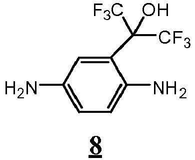

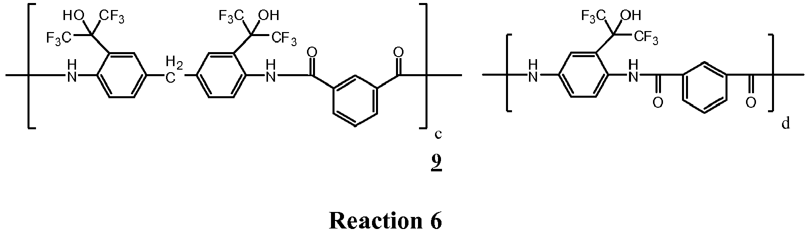

### Example 5: Production of Reaction Product 11

Referring to Reactions 1 and 7, to a 250-ml three-necked flask, the NaOH aq. solution (NaOH/water: 0.371g/75 ml) of **1** (2.31 g) and n-hexane solution of **10** (n-hexane/**10**: 75 ml/1.150 g) were added, and then the mixture was stirred vigorously using a mechanical stirrer at room temperature for 3 hours through nitrogen. A white powdery product **11** (2.94 g) was obtained by filtration and subsequent drying at room temperature under vacuum.

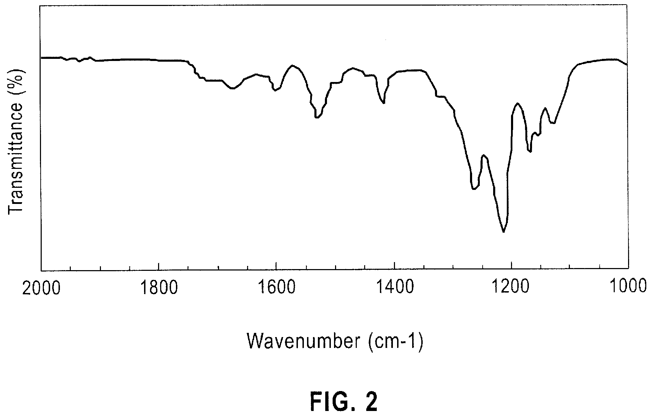

The IR spectrum of **11** is shown in Figure 2. In the IR spectrum shown in Figure 2, the characteristic peaks for carboxylic acid, amide, methylene and trifluoromethyl groups were observed at 1730, 1670, 1320 and 1220 cm-1 respectively.

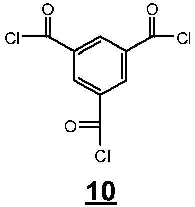

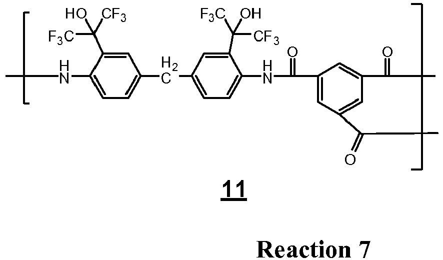

### Example 6: Production of Reaction Product 12

Referring to Reaction 7 and Formula 62 below, the product (polymer **12**) was produced from **2** and **10** (**2**/**10**: 1.135g/0.566g (2.13 mmol/2.13 mmol) in the same manner as Example 5, producing 1.41 g.

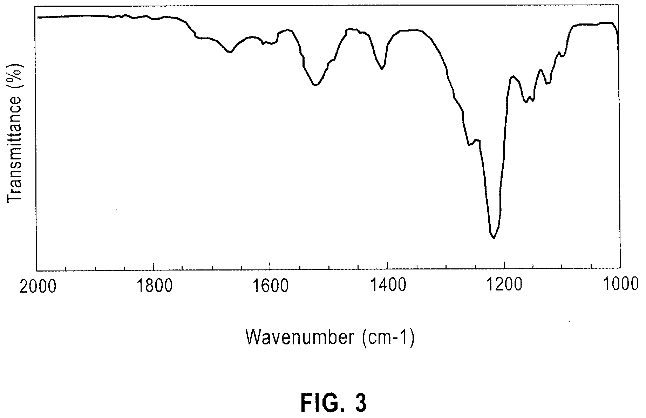

The IR spectrum of **12** is shown in Figure 3. In the IR spectrum shown in Figure 3, the characteristic peaks for carboxylic acid, amide and trifluoromethyl groups were observed at 1730, 1670 and 1220 cm-1 respectively.

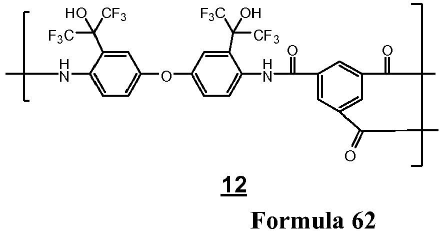

Various embodiments of the invention have been described. These and other embodiments are within the scope of the following claims.

## Claims

1. An interfacial polymerization method comprising reacting a chemical mixture (A) and a chemical mixture (B) to form a polyamide, wherein (A) and (B) are immiscible with each other, and wherein:
(A) is an aqueous base comprising a monomeric polyamine reactant having one or more hexafluoroalcohol groups represented by Formula 1: 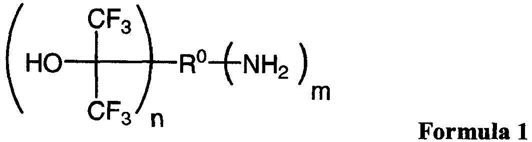 wherein R⁰ represents an organic group selected from the group consisting of aliphatic, alicyclic, aromatic, heterocyclic groups and combinations thereof, m is an integer of 2 or more, and n is an integer of 1 or more,
and
(B) is organic and comprises a monomeric polyfunctional acyl halide reactant represented by Formula 2:
R¹(̵COX)ₚ **Formula 2**
wherein R¹ represents an organic group selected from the group containing aliphatic alicyclic, aromatic, heterocyclic groups and combinations thereof, X is selected from the group consisting of fluorine, chlorine, bromine and iodine, and p represents an integer of 2 or more.

2. The method of claim 1, wherein R⁰ is an organic group with 2 to 30 carbon atoms.

3. The method of claim 1, wherein R¹ is an organic group with 1 to 30 carbon atoms.

4. The method of claim 1, wherein the base in (A) is selected from the group consisting of inorganic bases, organic bases, and combinations thereof.

5. The method of claim 1, wherein (B) comprises an organic solvent with 1 to 20 carbon atoms.

6. The method of claim 2, wherein R⁰ is an organic group selected from the group consisting of benzene, naphthalene, cyclohexane, adamantane, norbornane, and combinations thereof.

7. The method of claim 3, wherein R¹ is an organic group selected from the group consisting of benzene, naphthalene, cyclohexane, adamantane, norbornane, and combinations thereof.

8. The method of claim 4, wherein the base is selected from the group consisting of organic hydroxide, inorganic hydroxide, carbonate, bicarbonate, sulfide, amine and combinations thereof.

9. The method of claim 5, wherein the organic solvent is selected from the group consisting of n-hexane, n-heptane, n-octane, carbon tetrachloride, chloroform, dichloromethane, chlorobenzene, xylene, toluene, benzene, and combinations thereof.

10. The method of claim 4, wherein the base in solution (A) is selected from the group consisting of NaOH, KOH, Ca(OH)₂, Na₂CO₃, K₂CO₃, CaCO₃, NaHCO₃, KHCO₃, triethyl amine, pyridine, tetramethylammonium hydroxide and combinations thereof.

11. The method of claim 1, wherein at least one of (A) and (B) further comprise a phase transfer catalyst.

12. The method of claim 1, wherein the monomeric polyamine reactant is represented by any one of the Formulas 15 through 36:

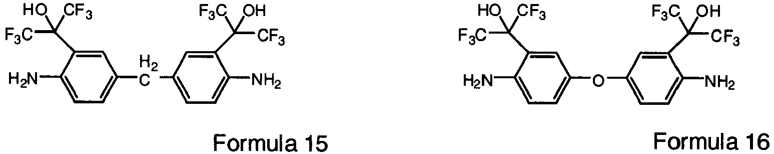

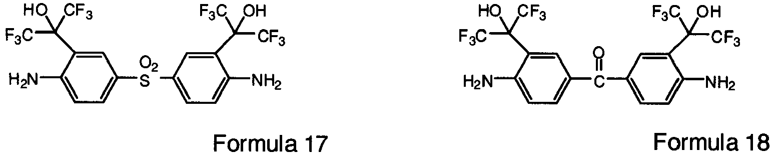

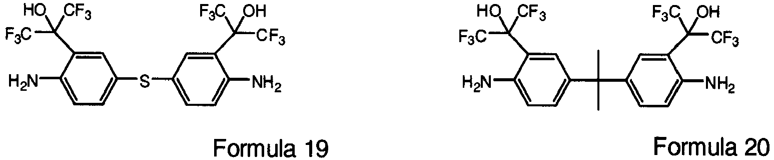

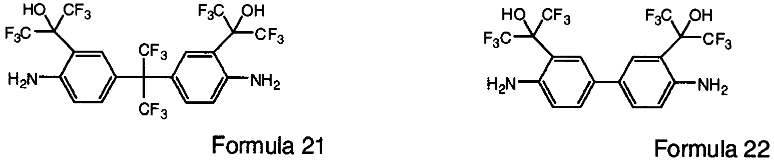

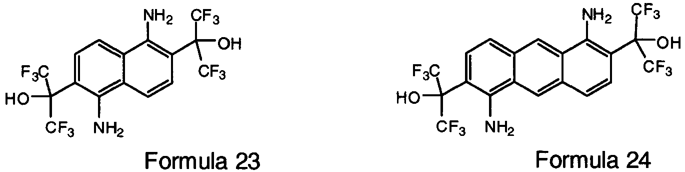

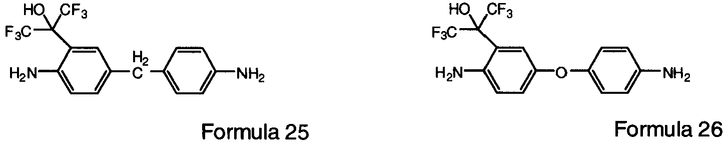

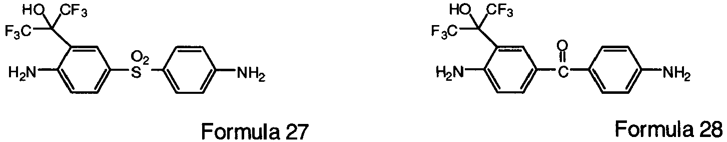

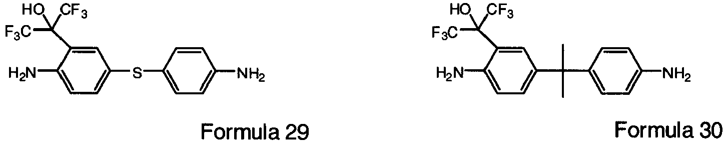

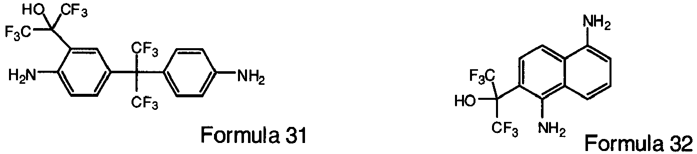

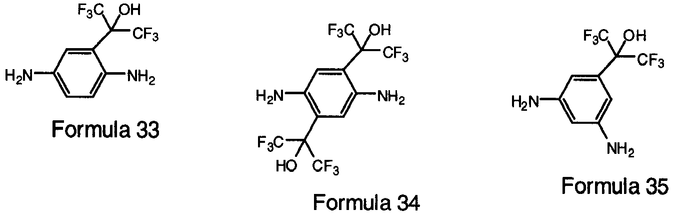

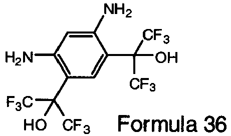

13. The method of claim 1, wherein the monomeric polyfunctional acyl halide reactant is represented by any of the Formulas 37 through 61.

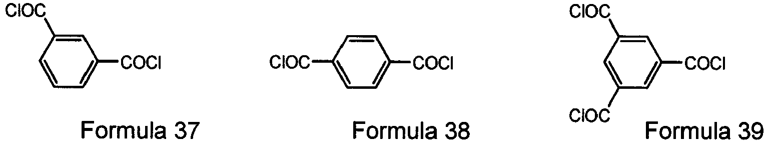

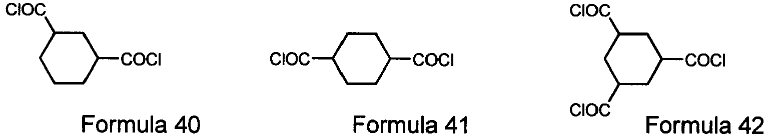

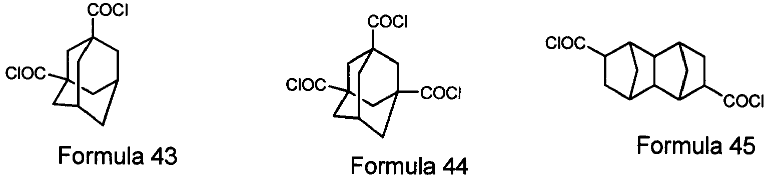

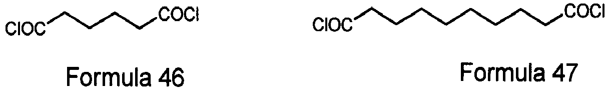

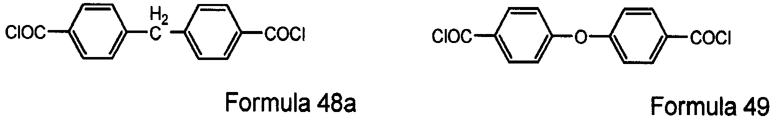

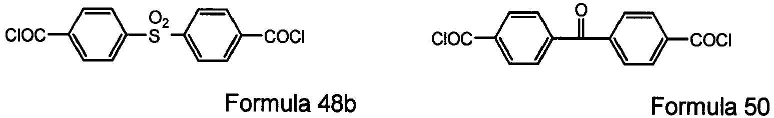

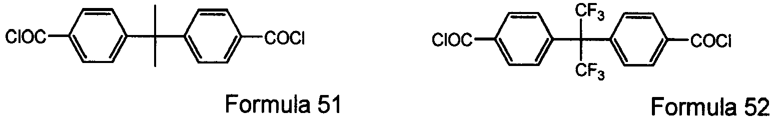

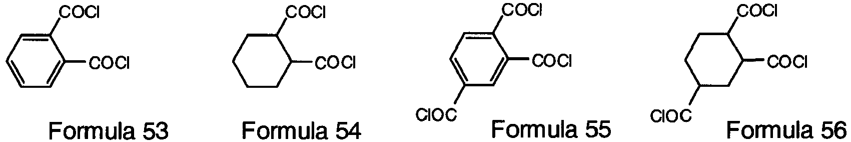

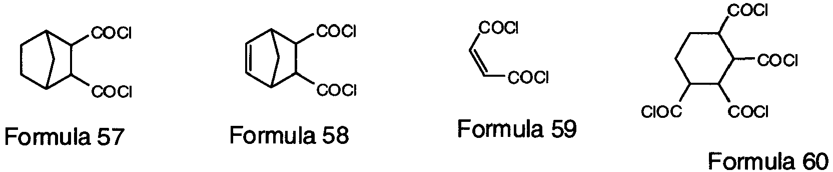

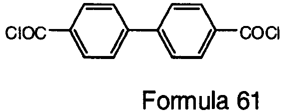

14. The method of claim 1, wherein the chemical mixtures (A) and (B) are each independently selected from solutions, dispersions and combinations thereof.

15. The method of claim 1, wherein the chemical mixtures (A) and (B) are each solutions.

## Patentansprüche

1. Grenzflächenpolymerisationsverfahren, aufweisend Umsetzen eines chemischen Gemisches (A) mit einem chemischen Gemisch (B), um ein Polyamid zu bilden, wobei (A) und (B) nicht miteinander mischbar sind und wobei:
(A) eine wässrige Base ist, aufweisend einen monomeren Polyamin-Reaktionspartner mit einer oder mehreren Hexafluoralkohol-Gruppen, dargestellt durch die Formel 1: 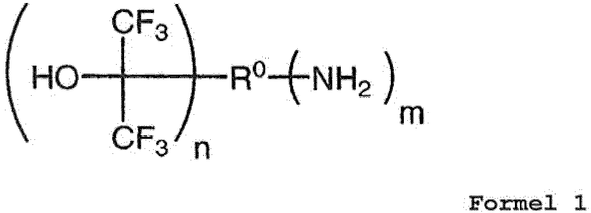 wobei R⁰ für eine organische Gruppe steht, die aus der Gruppe ausgewählt ist, die aus aliphatischen, alicyclischen, aromatischen, heterocyclischen Gruppen und Kombinationen davon besteht, m eine ganze Zahl von 2 oder mehr ist und n eine ganze Zahl von 1 oder mehr ist,
und
(B) organisch ist und einen monomeren polyfunktionellen Acylhalogenid-Reaktionspartner- aufweist, dargestellt durch die Formeln 2: 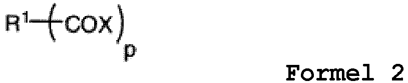 wobei R¹ für eine organische Gruppe steht, die aus der Gruppe ausgewählt ist, die aliphatische, alicyclische, aromatische, heterocyclische Gruppen und Kombinationen davon enthält, X aus der Gruppe ausgewählt ist, die aus Fluor, Chlor, Brom und Iod besteht, und p eine ganze Zahl von 2 oder mehr ist.

2. Verfahren nach Anspruch 1, wobei R⁰ eine organische Gruppe mit 2 bis 30 Kohlenstoffatomen ist.

3. Verfahren nach Anspruch 1, wobei R¹ eine organische Gruppe mit 1 bis 30 Kohlenstoffatomen ist.

4. Verfahren nach Anspruch 1, wobei die Base in (A) aus der Gruppe ausgewählt ist, die aus anorganischen Basen, organischen Basen und Kombinationen davon besteht.

5. Verfahren nach Anspruch 1, wobei (B) ein organisches Lösungsmittel mit 1 bis 20 Kohlenstoffatomen aufweist.

6. Verfahren nach Anspruch 2, wobei R⁰ eine organische Gruppe ist, die aus der Gruppe ausgewählt ist, die aus Benzen, Naphthalen, Cyclohexan, Adamantan, Norbornan und Kombinationen davon besteht.

7. Verfahren nach Anspruch 3, wobei R¹ eine organische Gruppe ist, die aus der Gruppe ausgewählt ist, die aus Benzen, Naphthalen, Cyclohexan, Adamantan, Norbornan und Kombinationen davon besteht.

8. Verfahren nach Anspruch 4, wobei die Base aus der Gruppe ausgewählt ist, die aus organischem Hydroxid, anorganischem Hydroxid, Carbonat, Bicarbonat, Sulfid, Amin und Kombinationen davon besteht.

9. Verfahren nach Anspruch 5, wobei das organische Lösungsmittel aus der Gruppe ausgewählt ist, die aus n-Hexan, n-Heptan, n-Octan, Tetrachlorkohlenstoff, Chloroform, Dichlormethan, Chlorbenzen, Xylen, Toluen, Benzen und Kombinationen davon besteht.

10. Verfahren nach Anspruch 4, wobei die Base in Lösung (A) aus der Gruppe ausgewählt ist, die aus NaOH, KOH, Ca(OH)₂, Na₂CO₃, K₂CO₃, CaCO₃, NaHCO₃, KHCO₃, Triethylamin, Pyridin, Tetramethylammoniumhydroxid und Kombinationen davon besteht.

11. Verfahren nach Anspruch 1, wobei mindestens eines aus (A) und (B) ferner einen Phasentransferkatalysator aufweist.

12. Verfahren nach Anspruch 1, wobei der monomere Polyamin-Reaktionspartner durch eine beliebige der Formeln 15 bis 36 dargestellt wird:

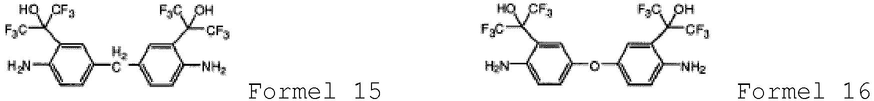

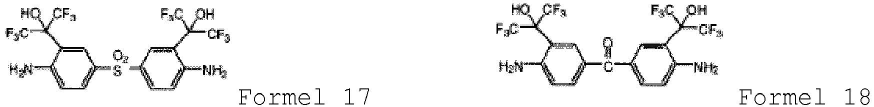

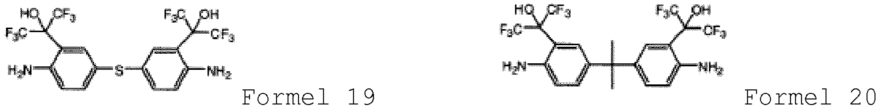

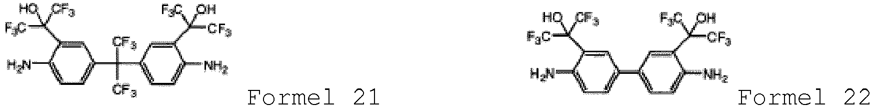

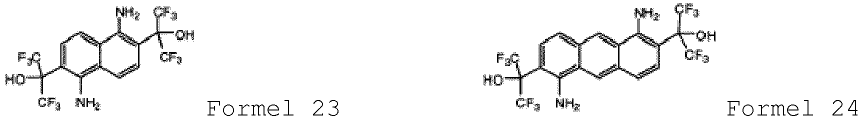

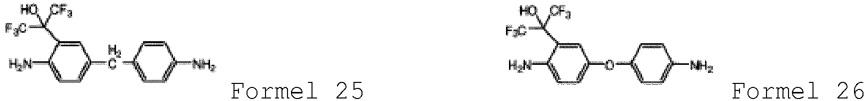

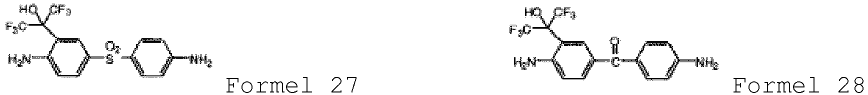

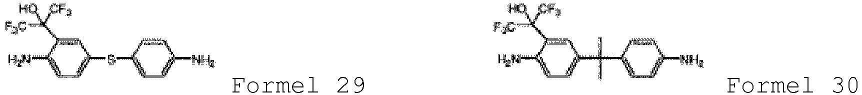

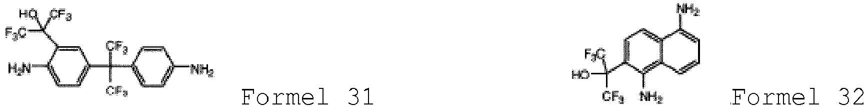

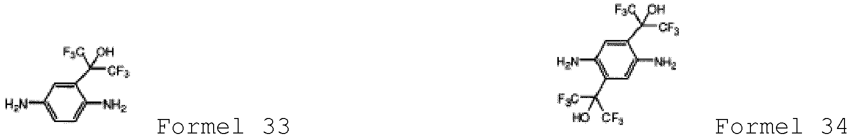

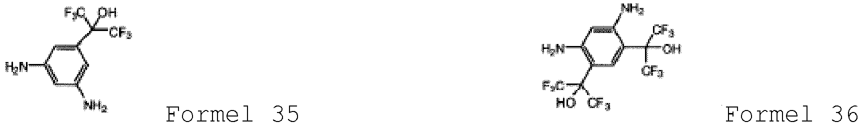

13. Verfahren nach Anspruch 1, wobei der monomere polyfunktionelle Acylhalogenid-Reaktionspartner durch eine beliebige der Formeln 37 bis 61 dargestellt wird.

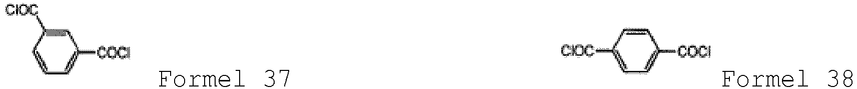

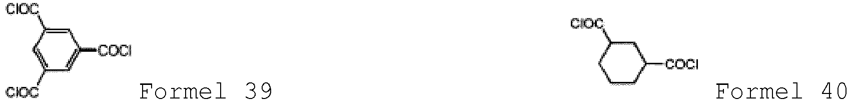

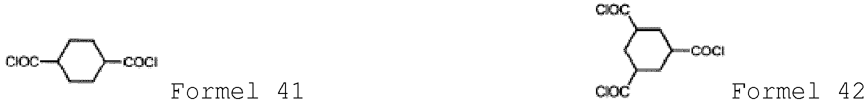

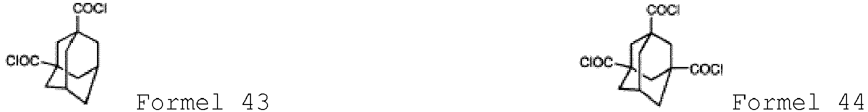

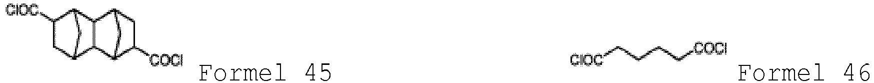

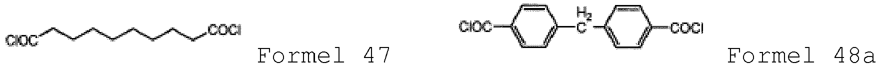

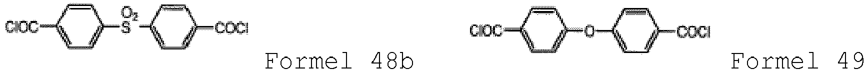

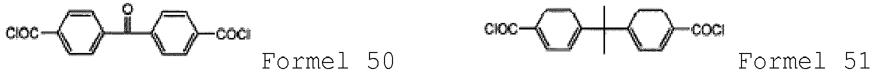

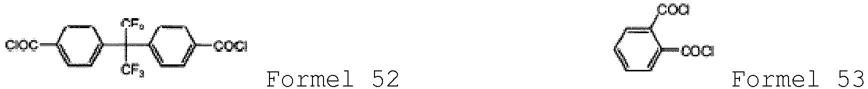

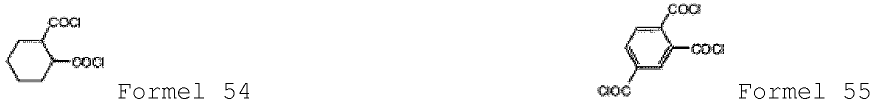

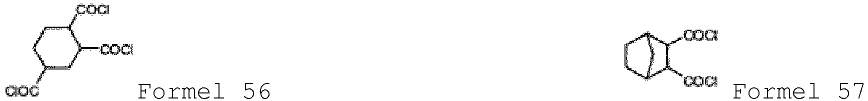

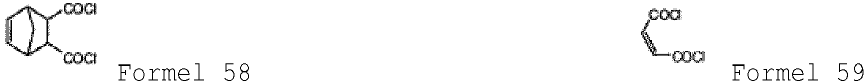

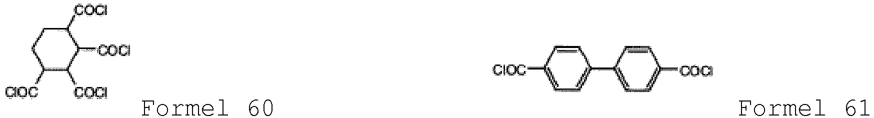

14. Verfahren nach Anspruch 1, wobei die chemischen Gemische (A) und (B) jeweils unabhängig aus Lösungen, Dispersionen und Kombinationen davon ausgewählt sind.

15. Verfahren nach Anspruch 1, wobei die chemischen Gemische (A) und (B) jeweils Lösungen sind.

## Revendications

1. Procédé de polymérisation interfacial comprenant la réaction d'un mélange chimique (A) et d'un mélange chimique (B) pour former un polyamide, où (A) et (B) ne sont pas miscibles l'un dans l'autre, et où :
(A) est une base aqueuse comprenant un réactif polyamine monomère avec un plusieurs groupements hexafluoroalcool représentés par la Formule 1: 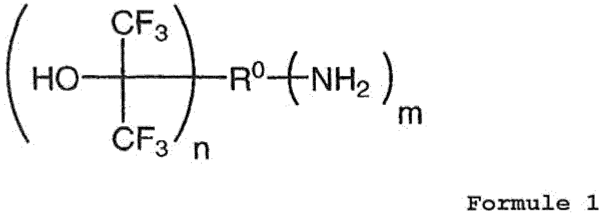 où R⁰ représente une groupement organique choisi dans le groupe constitué par les groupements aliphatiques, alicycliques, aromatiques, hétérocycliques et des combinaisons de ceux-ci, m est un nombre entier supérieur ou égal à 2, et n est un nombre entier supérieur ou égal à 1,
et
(B) est organique et comprend un réactif halogénure d'acyle polyfonctionnel monomère représenté par la Formule 2 : 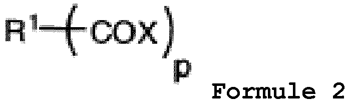 où R¹ représente un groupement organique choisi dans le groupe constitué par les groupements alicycliques aliphatiques, aromatiques, hétérocycliques et des combinaisons de ceux-ci, X est choisi dans le groupe constitué par le fluor, le chlore, le brome et l'iode, et p représente un nombre entier supérieur ou égal à 2.

2. Procédé selon la revendication 1, dans lequel R⁰ est un groupement organique ayant de 2 à 30 atomes de carbone.

3. Procédé selon la revendication 1, dans lequel R¹ est un groupement organique ayant de 1 à 30 atomes de carbone.

4. Procédé selon la revendication 1, dans lequel la base dans (A) est choisie dans le groupe formé par les bases minérales, les bases organiques et des combinaisons de celles-ci.

5. Procédé selon la revendication 1, dans lequel (B) comprend un solvant organique avec de 1 à 20 atomes de carbone.

6. Procédé selon la revendication 2, dans lequel R⁰ est un groupement organique choisi dans le groupe formé par le benzène, le naphtalène, le cyclohexane, l'adamantane, le norbornane, et des combinaisons de ceux-ci.

7. Procédé selon la revendication 3, dans lequel R¹ est un groupement organique choisi dans le groupe constitué par le benzène, le naphtalène, le cyclohexane, l'adamantane, le norbornane, et les combinaisons de ceux-ci.

8. Procédé selon la revendication 4, dans lequel la base est choisie dans le groupe constitué par un hydroxyde organique, un hydroxyde minéral, un carbonate, un bicarbonate, un sulfure, une amine et les combinaisons de ceux-ci.

9. Procédé selon la revendication 5, dans lequel le solvant organique est choisi dans le groupe constitué par le n-hexane, le n-heptane, le n-octane, le tétrachlorure de carbone, le chloroforme, le dichlorométhane, le chlorobenzène, le xylène, le toluène, le benzène, et des combinaisons de ceux-ci.

10. Procédé selon la revendication 4, dans lequel la base de la solution (A) est choisie dans le groupe constitué par NaOH, KOH, Ca(OH)₂, Na₂CO₃, K₂CO₃, CaCO₃, NaHCO₃, KHCO₃, la triéthylamine, la pyridine, l'hydroxyde de tétraméthylammonium et des combinaisons de ceux-ci.

11. Procédé selon la revendication 1, dans lequel au moins l'un parmi (A) et (B) comprend en outre un catalyseur de transfert de phase.

12. Procédé selon la revendication 1, dans lequel le réactif polyamine monomère est représenté selon l'une quelconque des formules 15 à 36 :

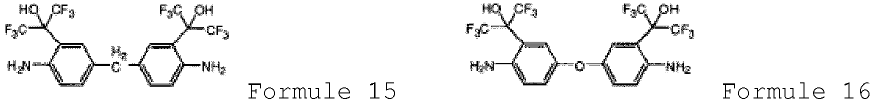

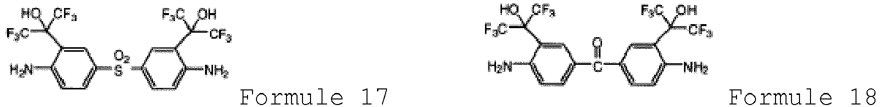

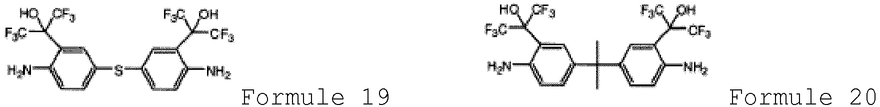

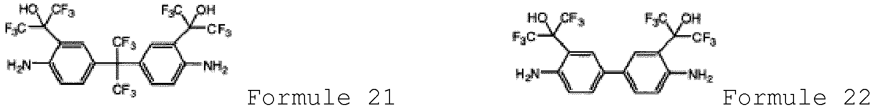

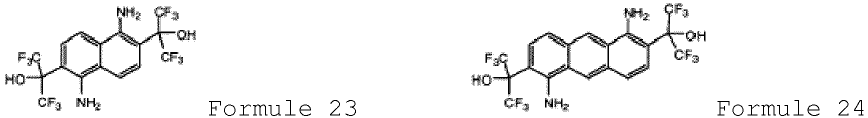

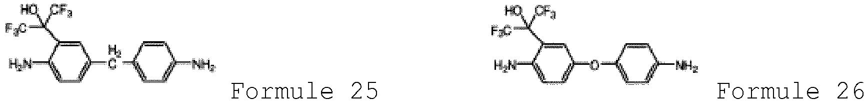

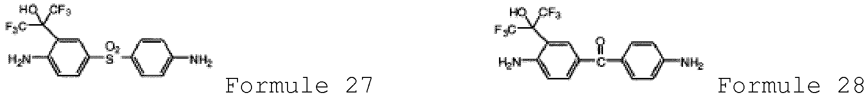

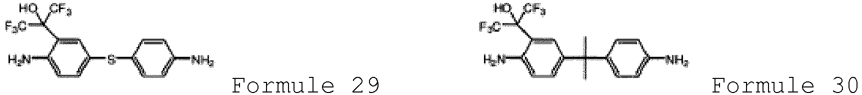

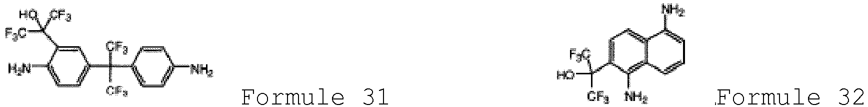

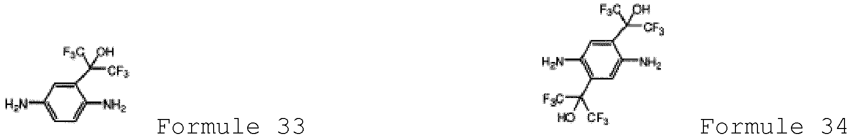

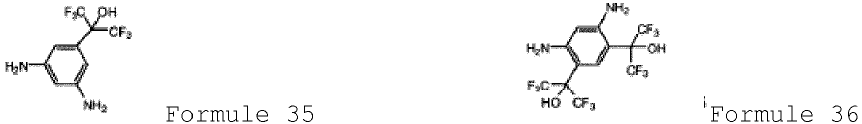

13. Procédé selon la revendication 1, dans lequel le réactif halogénure d'acyle polyfonctionnel monomère est représenté selon l'une quelconque des formules 37 à 61.

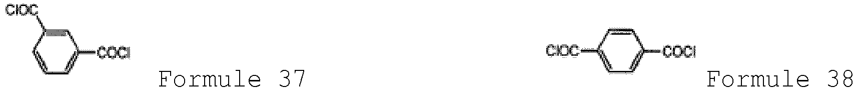

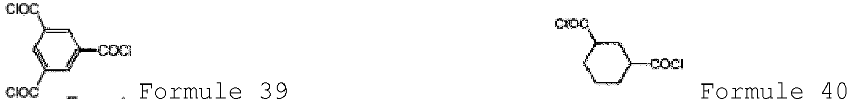

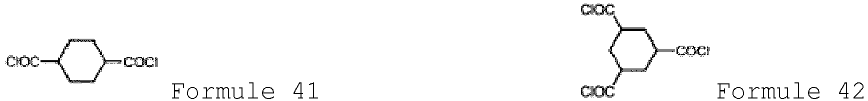

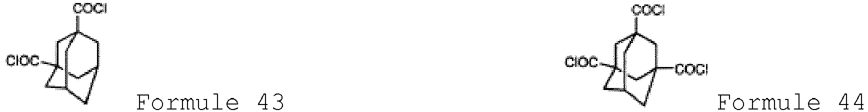

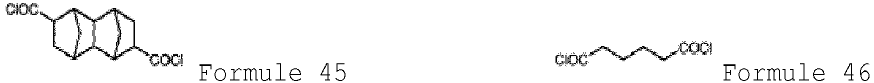

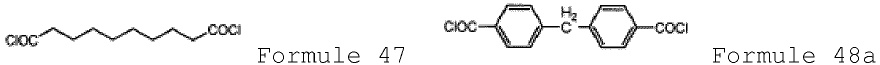

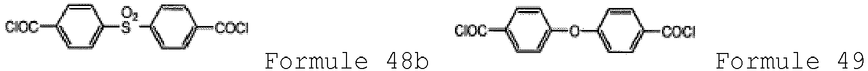

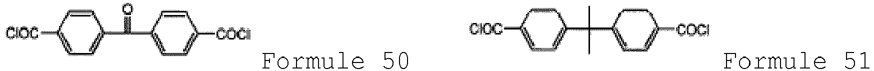

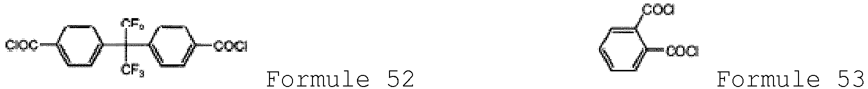

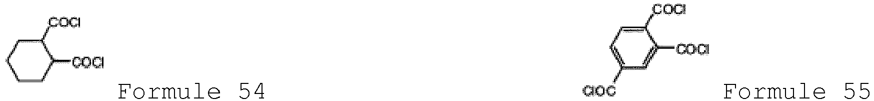

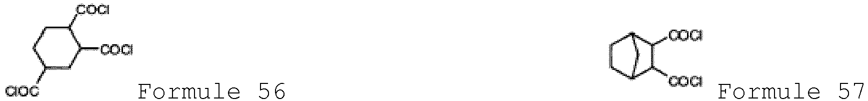

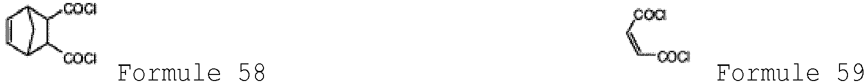

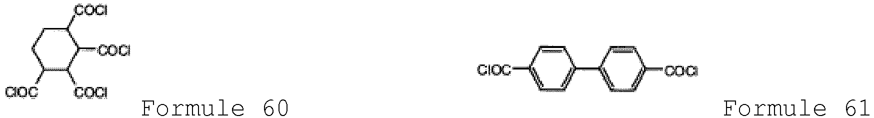

14. Procédé selon la revendication 1, dans lequel les mélanges chimiques (A) et (B) sont choisis chacun de manière indépendante à partir de solutions, de dispersions et de combinaisons de ceux-ci.

15. Procédé selon la revendication 1, dans lequel les mélanges chimiques (A) et (B) sont chacun des solutions.
